# EUROPEAN PATENT APPLICATION

(11) **EP 1 595 637 A1**
(43) Date of publication of application: **16.11.2005**
(21) Application number: 03777263.9
(22) Date of filing: 04.12.2003
(51) Int. Cl.: B23K 26/04, B28D 5/00

(54) **DEVICE AND METHOD FOR LASER PROCESSING**

(30) Priority: 06.12.2002 JP 2002355652
(71) Applicant: HAMAMATSU PHOTONICS K. K., Hamamatsu-shi, Shizuoka 435-0051 (JP)
(72) Inventor: FUKUMITSU, Kenshi, Hamamatsu-shi Shizuoka 435-8558 (JP); FUKUYO, Fumitsugu, Hamamatsu-shi Shizuoka 435-8558 (JP); KUNO, Koji, Hamamatsu-shi Shizuoka 435-8558 (JP)
(74) Representative: Grünecker, Kinkeldey, Stockmair & Schwanhäusser Anwaltssozietät
(86) International application number: PCT/JP2003/015556
(87) International publication number: WO 2004/052586

(57) **Abstract**

A laser processing apparatus and a laser processing method which can accurately converge processing laser light at a predetermined position are provided. In the laser processing apparatus, a condenser lens 31 converges processing laser light L1 and rangefinding laser light L2 onto an object to be processed 1 on the same axis. Here, light-converging point position control means 40 detects reflected light L3 of the rangefinding laser light reflected by the front face 3 of the object 1, and places a light-converging point P1 of the processing laser light L1 at a predetermined position. Since the processing by the processing laser light L1 and the measurement of displacement of the front face 3 by the rangefinding laser light L2 are carried out on the same axis as such, the light-converging point P1 of processing laser light L1 can be prevented from shifting from the predetermined position because of vibrations of the stage 21 and the like. Therefore, the processing laser light L1 can accurately be converged at the predetermined position.

## Description

### Technical Field

The present invention relates to a laser processing apparatus and laser processing method for processing an object to be processed by irradiating it with laser light.

### Background Art

Known as a conventional laser processing apparatus is one in which measuring means (contact-type displacement meter, ultrasonic rangefinder, etc.) for measuring the surface height of the object is provided along with a condenser lens for converging laser light for processing an object to be processed (see, for example, Figs. 8 to 10 of Japanese Patent Application Laid-Open No. 2002-219591) with a predetermined gap therebetween. For scanning laser light along a surface of an object to be processed, such a laser processing apparatus measures the surface height of the object by the measuring means, and drives the condenser lens along its optical axis such that the distance between the condenser lens and the surface of the object becomes constant according to the measured value of the surface height at the time when the measurement point is positioned just under the condenser lens. This can irradiate the object with laser light while always positioning a light-converging point of the laser light at the surface of the object even when the surface of the object has irregularities.

### Disclosure of the Invention

However, the following problem exists in the above-mentioned laser processing apparatus. Namely, since the condenser lens and the measuring means are disposed along with each other with a predetermined gap therebetween, there is a fear of an error occurring between the actual surface height of the object just under the condenser lens and the value measured by the measuring means because of vibrations of a stage mounting the object and the like, whereby the position of light-converging point of laser light may shift from the surface of the object.

Therefore, in view of such circumstances, it is an object of the present invention to provide a laser processing apparatus and laser processing method which can accurately converge laser light for processing the object at a predetermined position.

For achieving the above-mentioned object, in one aspect, the present invention provides a laser processing apparatus for irradiating a wafer-like object to be processed with first laser light while locating a light-converging point within the object so as to form a modified region by multiphoton absorption within the object, the apparatus comprising a condenser lens for converging the first laser light and second laser light for measuring a displacement of a laser light irradiation surface of the object onto the object on the same axis, and light-converging point position control means for regulating a position of the light-converging point of the first laser light within the object by detecting reflected light of the second laser light reflected by the laser light irradiation surface.

In this laser processing apparatus, the first laser light for forming a modified region by multiphoton absorption and the second laser light for measuring the displacement of the laser light irradiation surface of the object are converged on the same axis by the condenser lens onto the object. Here, the light-converging point position control means detects the reflected light of the second laser light reflected by the laser light irradiation surface, and places the light-converging point of the first laser light at a predetermined position within the object. Since the forming of the modified region by the first laser light and the measurement of the displacement of the laser light irradiation surface by the second laser light are performed on the same axis, the position of light-converging point of the first laser light can be prevented from shifting from a predetermined position within the object because of vibrations of a stage mounting the object and the like, for example. Therefore, the first laser light for processing the object can accurately be converged at a predetermined position.

When forming a modified region caused by multiphoton absorption within the wafer-like object, it is necessary for the condenser lens to have a larger numerical aperture, whereby the condenser lens and the object are placed closer to each other than in the case of laser processing such as fusion cutting. While it is quite difficult to place measuring means beside the condenser lens as in the conventional laser processing apparatus under such a condition in terms of apparatus configuration, the laser processing apparatus in accordance with the present invention makes it unnecessary to employ such a difficult configuration.

Preferably, the laser light irradiation surface is a surface of the object on the condenser lens side, whereas the light-converging point position control means regulates the position of light-converging point of the first laser light such that the position of light-converging point of the first laser light is at a predetermined depth from the surface on the condenser lens side. This can stabilize the accuracy of cutting on the surface side of the object when cutting the object from the modified region acting as a start point, for example. Such stabilization of the accuracy of cutting on the surface side is effective in particular when forming the surface of the object with a plurality of functional devices and cutting the object into the individual functional devices, since the functional devices can be prevented from being damaged. The functional devices refer to light-receiving devices such as photodiodes, light-emitting devices such as laser diodes, circuit devices formed as circuits, etc.

Preferably, the light-converging point position control means regulates the position of light-converging point of the first laser light within the object by changing a distance between the condenser lens and the object. Namely, when at least one of the condenser lens and object is moved, the light-converging point of the first laser can be placed at a predetermined position.

Preferably, a filter transmitting the reflected light of the second laser light but blocking reflected light of the first laser light reflected by the laser light irradiation surface is provided on the optical path of the reflected light of the second laser light. When this filter is employed, the light-converging point position detecting means can accurately detect the reflected light of the second laser light without being influenced by the reflected light of the first laser light, whereby the positional accuracy of the light-converging point of the first laser light can further be improved.

In another aspect, the present invention provides a laser processing apparatus for irradiating an object to be processed with first laser light so as to process the object, the apparatus comprising a condenser lens for converging the first laser light and second laser light for measuring a displacement of a laser light irradiation surface of the object onto the object on the same axis, and light-converging point position control means for regulating a position of a light-converging point of the first laser light with respect to the object by detecting reflected light of the second laser light reflected by the laser light irradiation surface.

This laser processing apparatus can accurately converge the first laser light for processing the object at a predetermined position as with the above-mentioned laser processing apparatus for forming a modified region by multiphoton absorption.

For achieving the above-mentioned object, in still another aspect, the present invention provides a laser processing method of irradiating a wafer-like object to be processed with first laser light while locating a light-converging point within the object so as to form a modified region by multiphoton absorption within the object; the method comprising the steps of converging the first laser light and second laser light for measuring a displacement of a laser light irradiation surface of the object onto the object on the same axis; and regulating a position of the light-converging point of the first laser light within the object by detecting reflected light of the second laser light reflected by the laser light irradiation surface.

In still another aspect, the present invention provides a laser processing method of irradiating an object to be processed with first laser light so as to process the object; the method comprising the steps of converging the first laser light and second laser light for measuring a displacement of a laser light irradiation surface of the object onto the object on the same axis; and regulating a position of the light-converging point of the first laser light with respect to the object by detecting reflected light of the second laser light reflected by the laser light irradiation surface.

### Brief Description of the Drawings

Fig. 1 is a plan view of an object to be processed during laser processing by the laser processing method in accordance with an embodiment;

Fig. 2 is a sectional view of the object taken along the line II-II of Fig. 1;

Fig. 3 is a plan view of the object after the laser processing by the laser processing method in accordance with the embodiment;

Fig. 4 is a sectional view of the object taken along the line IV-IV of Fig. 3;

Fig. 5 is a sectional view of the object taken along the line V-V of Fig. 3;

Fig. 6 is a plan view of the object cut by the laser processing method in accordance with the embodiment;

Fig. 7 is a graph showing relationships between the field intensity and crack spot size in the laser processing method in accordance with the embodiment;

Fig. 8 is a sectional view of the object in a first step of the laser processing method in accordance with the embodiment;

Fig. 9 is a sectional view of the object in a second step of the laser processing method in accordance with the embodiment;

Fig. 10 is a sectional view of the object in a third step of the laser processing method in accordance with the embodiment;

Fig. 11 is a sectional view of the object in a fourth step of the laser processing method in accordance with the embodiment;

Fig. 12 is a view showing a photograph of a cross section of a part of a silicon wafer cut by the laser processing method in accordance with the embodiment;

Fig. 13 is a graph showing relationships between the laser light wavelength and the transmittance within the silicon substrate in the laser processing method in accordance with the embodiment;

Fig. 14 is a schematic diagram of the laser processing apparatus in accordance with the embodiment;

Fig. 15 is a schematic diagram showing the light-converging point position control means in the laser processing apparatus shown in Fig. 14;

Fig. 16 is a view for explaining a converged light image pattern of reflected light of rangefinding laser light in a case where the light-converging point of rangefinding laser light is positioned on a surface of the object;

Fig. 17 is a view for explaining a converged light image pattern of reflected light of rangefinding laser light in a case where the light-converging point of the rangefinding pattern is positioned beyond the surface of the object;

Fig. 18 is a view for explaining a converged light image pattern of reflected light of rangefinding laser light in a case where the light-converging point of the rangefinding pattern is positioned in front of the surface of the object; and

Fig. 19 is a view showing how the object is processed by the laser processing apparatus shown in Fig. 14.

### Best Modes for Carrying Out the Invention

In the following, preferred embodiments of the laser processing apparatus and laser processing method in accordance with the present invention will be explained in detail with reference to the drawings.

The laser processing apparatus in accordance with an embodiment irradiates a wafer-like object to be processed while locating a light-converging point within the object, so as to form a modified region by multiphoton absorption within the object. Therefore, before explaining the laser processing apparatus in accordance with this embodiment, the forming of a modified region by the multiphoton absorption will be explained.

A material becomes transparent when its absorption bandgap E_{G} is greater than photon energy hv. Hence, a condition under which absorption occurs in the material is hv > E_{G}. However, even when optically transparent, the material generates absorption under a condition of nhv > E_{G} (where n = 2, 3, 4, ...) if the intensity of laser light becomes very high. This phenomenon is known as multiphoton absorption. In the case of pulsed waves, the intensity of laser light is determined by the peak power density (W/cm²) of laser light at a light-converging point. The multiphoton absorption occurs under a condition where the peak power density is 1 x 10⁸ (W/cm²) or greater, for example. The peak power density is determined by (energy of laser light at the light-converging point per pulse)/(beam spot cross-sectional area of laser light x pulse width). In the case of continuous waves, the intensity of laser light is determined by the field intensity (W/cm²) of laser light at the light-converging point.

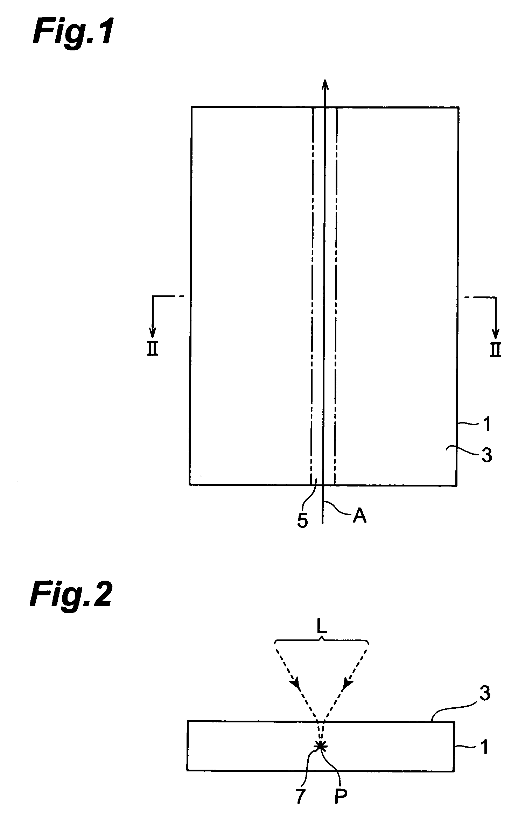

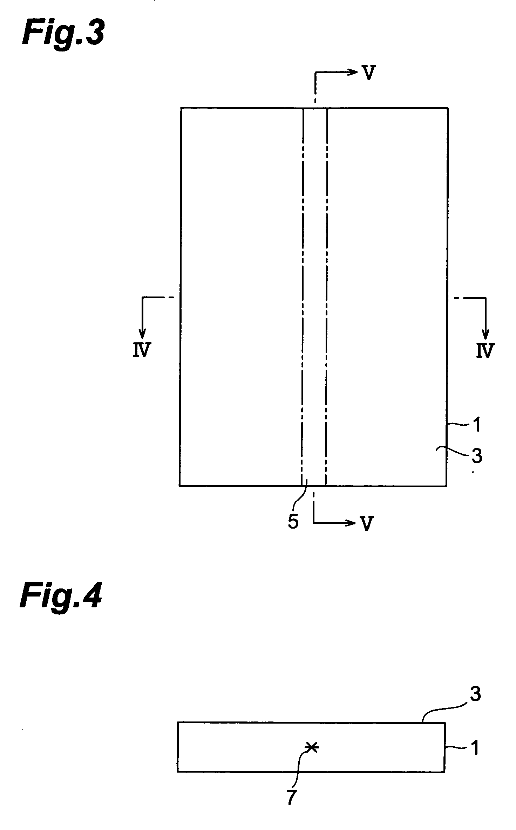

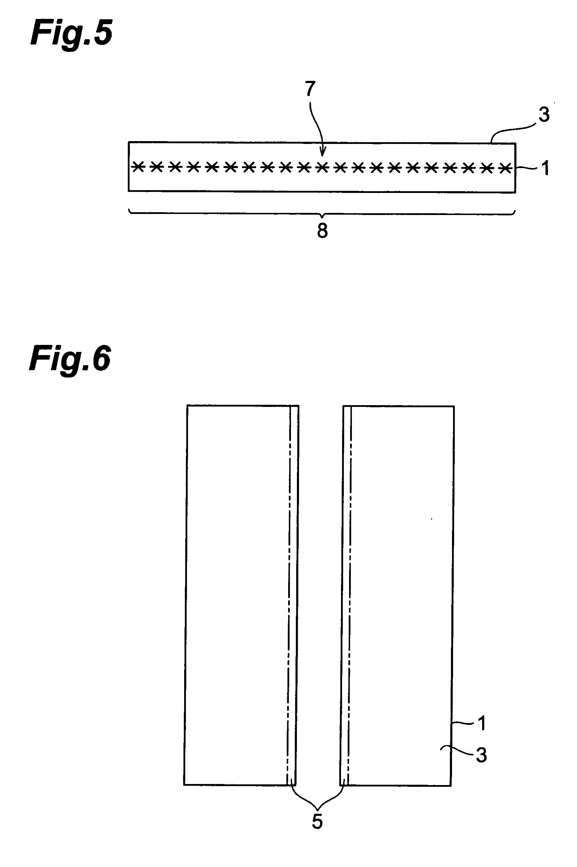

The principle of the laser processing method in accordance with an embodiment using such multiphoton absorption will be explained with reference to Figs. 1 to 6. Fig. 1 is a plan view of an object to be processed 1 during laser processing. Fig. 2 is a sectional view of the object 1 taken along the line II-II of Fig. 1. Fig. 3 is a plan view of the object 1 after the laser processing. Fig. 4 is a sectional view of the object 1 taken along the line IV-IV of Fig. 3. Fig. 5 is a sectional view of the object taken along the line V-V of Fig. 3. Fig. 6 is a plan view of the cut object 1.

As shown in Figs. 1 and 2, on a front face 3 of the object 1, a line to cut 5 for cutting the object 1 exists. The line to cut 5 is a virtual line extending straight (or a line may actually be drawn on the object 1 as the line to cut 5). The laser processing in accordance with this embodiment irradiates the object 1 with laser light L while locating a light-converging point P within the object 1 under a condition generating multiphoton absorption, so as to form a modified region 7. The light-converging point P is a position at which the laser light L is converged.

The laser light L is relatively moved along the line to cut 5 (i.e., in the direction of arrow A), so as to shift the light-converging point P along the line to cut 5. Consequently, as shown in Figs. 3 to 5, the modified region 7 is formed along the line to cut 5 only within the object 1, whereas a part to cut 8 is formed by the modified region 7. In the laser processing method in accordance with this embodiment, the modified region 7 is not formed by the heat generated from the object 1 absorbing the laser light L. The laser light L is transmitted through the object 1, so as to generate multiphoton absorption therewithin, thereby forming the modified region 7. Therefore, the front face 3 of the object 1 hardly absorbs the laser light L and does not melt.

When a start point exists in a cutting part at the time of cutting the object 1, the object 1 fractures from the start point, whereby the object 1 can be cut with a relatively small force as shown in Fig. 6. Therefore, the object 1 can be cut without generating unnecessary fractures on the front face 3 of the object 1.

There seem to be the following two ways of cutting the object from the part to cut acting as a start point. The first case is where an artificial force is applied to the object after forming the part to cut, so that the object fractures from the part to cut, whereby the object is cut. This is the cutting in the case where the object has a large thickness, for example. Applying an artificial force refers to exerting a bending stress or shear stress to the object along the part to cut, or generating a thermal stress by applying a temperature difference to the object, for example. The other case is where the forming of the part to cut causes the object to fracture naturally in its cross-sectional direction (thickness direction) from the part to cut acting as a start point, thereby cutting the object. This becomes possible if the part to cut is formed by one row of the modified region when the object has a small thickness, or if the part to cut is formed by a plurality of rows of the modified region in the thickness direction when the object has a large thickness. Even in this naturally fracturing case, fractures do not extend onto the front face at a portion corresponding to an area not formed with the part to cut, so that only the portion corresponding to the area formed with the part to cut can be cleaved, whereby cleavage can be controlled well. Such a cleaving method with a favorable controllability is quite effective, since the object to be processed such as silicon wafer has recently been apt to decrease its thickness.

The modified region formed by multiphoton absorption in this embodiment encompasses the following cases (1) to (3):

(1) Case where the modified region is a crack region including one crack or a plurality of cracks
An object to be processed (e.g., glass or a piezoelectric material made of LiTaO₃) is irradiated with laser light while locating a light-converging point therewithin under a condition with a field intensity of at least 1 x 10⁸ (W/cm²) at the light-converging point and a pulse width of 1 µs or less. This magnitude of pulse width is a condition under which a crack region can be formed only within the object while generating multiphoton absorption without causing unnecessary damages on the front face of the object. This generates a phenomenon of optical damage by multiphoton absorption within the object. This optical damage induces a thermal distortion within the object, thereby forming a crack region therewithin. The upper limit of field intensity is 1 x 10¹² (W/cm²), for example. The pulse width is preferably 1 to 200 ns, for example. The forming of a crack region by multiphoton absorption is disclosed, for example, in "Internal Marking of Glass Substrate with Solid-state Laser", Proceedings of the 45th Laser Materials Processing Conference (December, 1998), pp. 23-28.

The inventors determined the relationship between field intensity and crack size by an experiment. The following are conditions of the experiment.
(A) Object to be processed: Pyrex (registered trademark) glass (with a thickness of 700 µm)
(B) Laser
   light source: semiconductor laser pumping Nd:YAG laser
   wavelength: 1064 nm
   laser light spot cross-sectional area: 3.14 x 10⁻⁸ cm²
   oscillation mode: Q-switched pulse
   repetition frequency: 100 kHz
   pulse width: 30 ns
   output: output < 1 mJ/pulse
   laser light quality: TEM₀₀
   polarizing property: linear polarization
(C) Condenser lens
   transmittance at a laser light wavelength: 60%
(D) Moving rate of the mounting table mounting the object: 100 mm/sec

The laser light quality of TEM₀₀ means that the light-converging characteristic is so high that convergence to about the wavelength of laser light is possible.

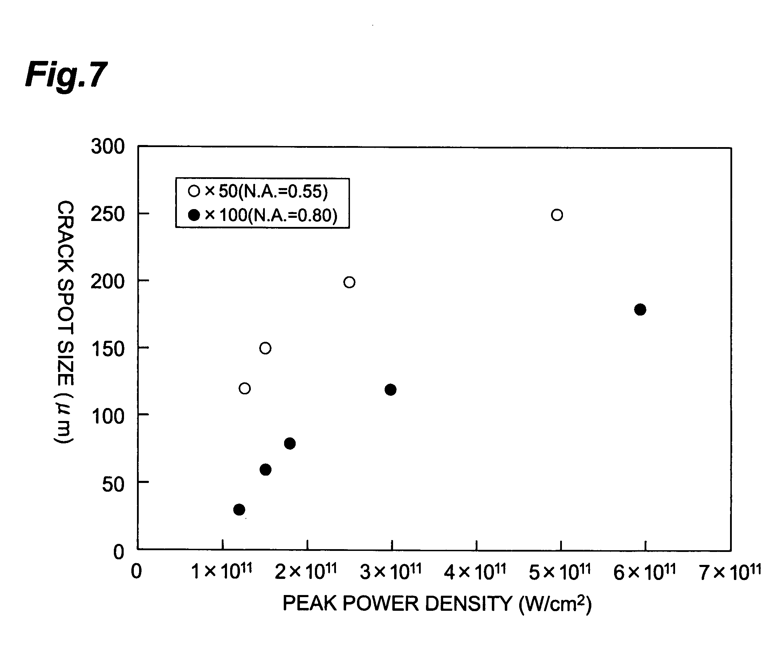

Fig. 7 is a graph showing the results of the above-mentioned experiment. The abscissa indicates the peak power density. Since the laser light is pulsed laser light, the field intensity is represented by the peak power density. The ordinate indicates the size of a crack part (crack spot) formed within the object by one pulse of laser light. Crack spots gather to yield a crack region. The crack spot size is the size of a part yielding the maximum length among forms of crack spots. Data represented by black circles in the graph refer to a case where the condenser lens (C) has a magnification of x100 and a numerical aperture (NA) of 0.80. On the other hand, data represented by whitened circles in the graph refer to a case where the condenser lens (C) has a magnification of x5O and a numerical aperture (NA) of 0.55. Crack spots are seen to occur within the object from when the peak power density is about 10¹¹ (W/cm²) and become greater as the peak power density increases.

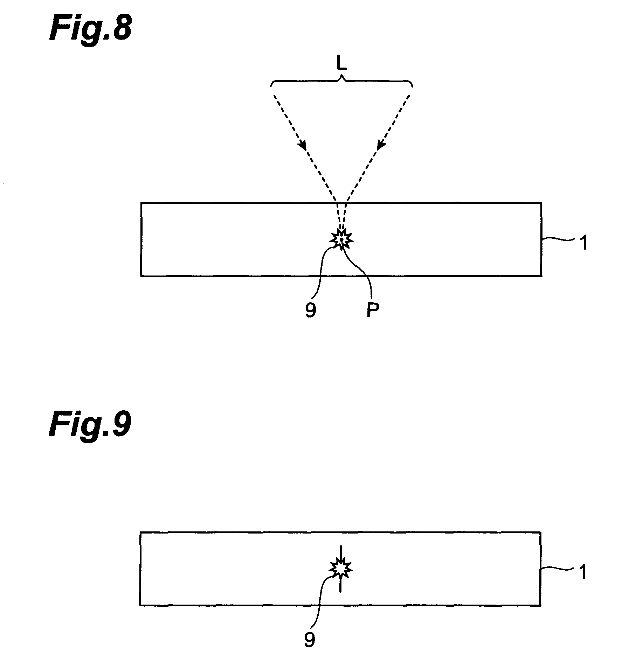

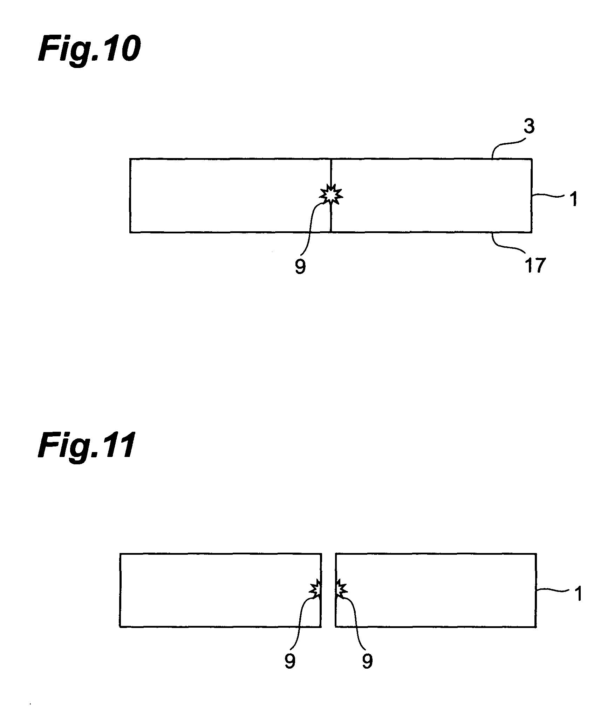

A mechanism by which the objet to be processed is cut by forming a crack region will now be explained with reference to Figs. 8 to 11. As shown in Fig. 8, the object 1 is irradiated with laser light L while the light-converging point P is located within the object 1 under a condition where multiphoton absorption occurs, so as to form a crack region 9 therewithin along a line to cut. The crack region 9 is a region containing one crack or a plurality of cracks. The crack region 9 forms a part to cut. As shown in Fig. 9, a crack further grows from the crack region 9 acting as a start point (i.e., from the part to cut acting as a start point), and reaches the front face 3 and rear face 17 of the object 1 as shown in Fig. 10, whereby the object 1 fractures and is consequently cut as shown in Fig. 11. The crack reaching the front face 3 and rear face 17 of the object 1 may grow naturally or as a force is applied to the object 1.

(2) Case where the modified region is a molten processed region An object to be processed (e.g., semiconductor material such as silicon) is irradiated with laser light while locating a light-converging point within the object under a condition with a field intensity of at least 1 x 10⁸ (W/cm²) at the light-converging point and a pulse width of 1 µs or less. As a consequence, the inside of the object is locally heated by multiphoton absorption. This heating forms a molten processed region within the object. The molten processed region encompasses regions once molten and then re-solidified, regions just in a molten state, and regions in the process of being re-solidified from the molten state, and can also be referred to as a region whose phase has changed or a region whose crystal structure has changed. The molten processed region may also be referred to as a region in which a certain structure changes to another structure among monocrystal, amorphous, and polycrystal structures. For example, it means a region having changed from the monocrystal structure to the amorphous structure, a region having changed from the monocrystal structure to the polycrystal structure, or a region having changed from the monocrystal structure to a structure containing amorphous and polycrystal structures. When the object to be processed is of a silicon monocrystal structure, the molten processed region is an amorphous silicon structure, for example. The upper limit of field intensity is 1 x 10¹² (W/cm²), for example. The pulse width is preferably 1 to 200 ns, for example.

By an experiment, the inventors verified that a molten processed region was formed within a silicon wafer. The following are conditions of the experiment.
(A) Object to be processed: silicon wafer (with a thickness of 350 µm and an outer diameter of 4 inches)
(B) Laser
   light source: semiconductor laser pumping Nd: YAG laser
   wavelength: 1064 nm
   laser light spot cross-sectional area: 3.14 x 10⁻⁸ cm²
   oscillation mode: Q-switched pulse
   repetition frequency: 100 kHz
   pulse width: 30 ns
   output: 20 µJ/pulse
   laser light quality: TEM₀₀
   polarizing property: linear polarization
(C) Condenser lens
   magnification: x50
   N.A: 0.55
   transmittance at a laser light wavelength: 60%
(D) Moving rate of the mounting table mounting the object: 100 mm/sec

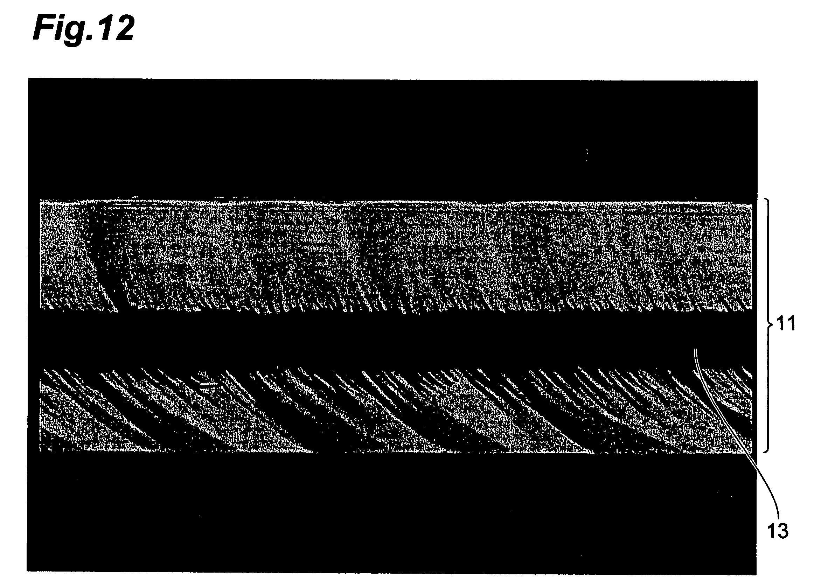

Fig. 12 is a view showing a photograph of a cross section of a part of a silicon wafer cut by laser processing under the conditions mentioned above. A molten processed region 13 is formed within the silicon wafer 11. The molten processed region 13 formed under the above-mentioned conditions has a size of about 100 µm in the thickness direction.

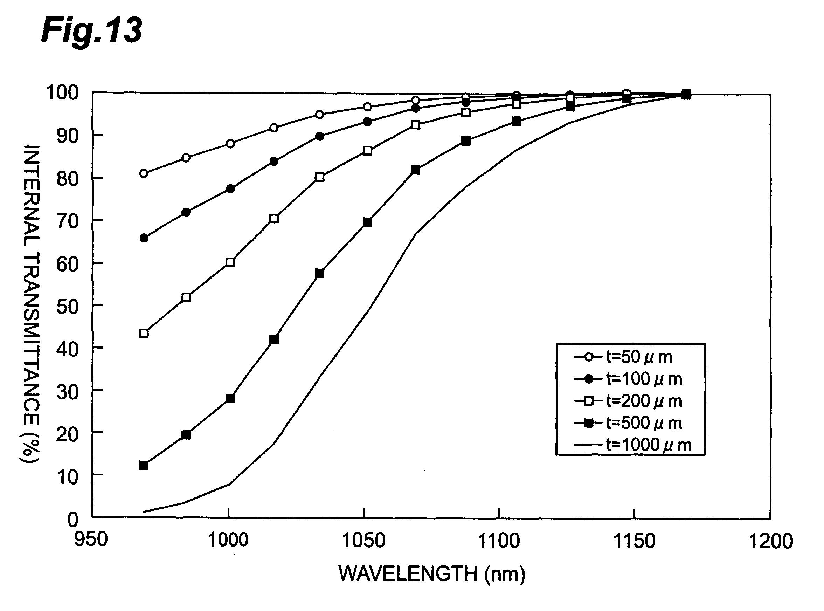

The fact that the molten processed region 13 is formed by multiphoton absorption will now be explained. Fig. 13 is a graph showing relationships between the laser light wavelength and the transmittance within the silicon substrate. Here, the respective reflected components on the front and rear sides of the silicon substrate are eliminated, so as to show the internal transmittance alone. The respective relationships are shown in the cases where the thickness t of the silicon substrate is 50 µm, 100 µm, 200 µm, 500 µm, and 1000 µm.

For example, at the Nd:YAG laser wavelength of 1064 nm, the laser light appears to be transmitted through the silicon substrate by at least 80% when the silicon substrate has a thickness of 500 µm or less. Since the silicon wafer 11 shown in Fig. 12 has a thickness of 350 µm, the molten processed region 13 caused by multiphoton absorption is formed near the center of the silicon wafer 11, i.e., at a part distanced from the front face by 175 µm. The transmittance in this case is 90% or more with reference to a silicon wafer having a thickness of 200 µm, whereby the laser light is absorbed only slightly within the silicon wafer 11 but is substantially transmitted therethrough. This means that the molten processed region 13 is formed within the silicon wafer 11 not by laser light absorption within the silicon wafer 11 (i.e., not by usual heating with the laser light) but by multiphoton absorption. The forming of a molten processed region by multiphoton absorption is disclosed, for example, in "Silicon Processing Characteristic Evaluation by Picosecond Pulse Laser", Preprints of the National Meetings of Japan Welding Society, Vol. 66 (April, 2000), pp. 72-73.

A fracture is generated in a silicon wafer from a part to cut formed by a molten processed region, acting as a start point, toward a cross section, and reaches the front and rear faces of the silicon wafer, whereby the silicon wafer is cut. The fracture reaching the front and rear faces of the silicon wafer may grow naturally or as a force is applied to the silicon wafer. The fracture naturally growing from the part to cut to the front and rear faces of the silicon wafer encompasses a case where the fracture grows from a state where the molten processed region forming the part to cut is molten and a case where the fracture grows when the molten processed region forming the part to cut is re-solidified from the molten state. In either case, the molten processed region is formed only within the silicon wafer, and thus is present only within the cut section after cutting as shown in Fig. 12. When a part to cut is formed within the object by a molten processed region as such, unnecessary fractures deviating from a part to cut line are harder to occur at the time of cleaving, whereby cleavage control becomes easier.

(3) Case where the modified region is a refractive index change region
An object to be processed (e.g., glass) is irradiated with laser light while locating a light-converging point within the object under a condition with a field intensity of at least 1 x 10⁸ (W/cm²) at the light-converging point and a pulse width of 1 ns or less. When multiphoton absorption is generated within the object with a very short pulse width, the energy caused by multiphoton absorption is not converted into thermal energy, whereby an eternal structure change such as ion valence change, crystallization, or orientation polarization is induced within the object, thus forming a refractive index change region. The upper limit of field intensity is 1 x 10¹² (W/cm²), for example. The pulse width is preferably 1 ns or less, for example, more preferably 1 ps or less. The forming of a refractive index change region by multiphoton absorption is disclosed, for example, in "Forming of Photoinduced Structure within Glass by Femtosecond Laser Irradiation", Proceedings of the 42nd Laser Materials Processing Conference (November 1997), pp. 105-111.

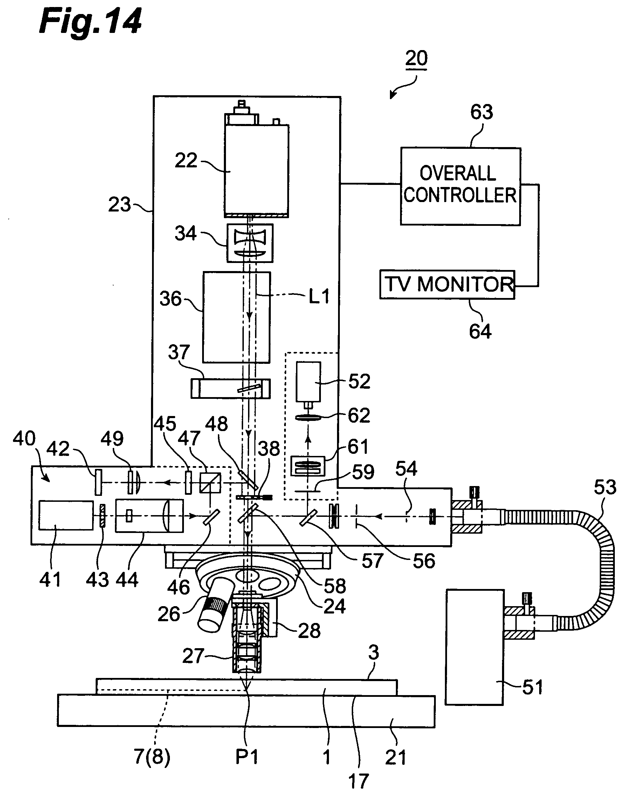

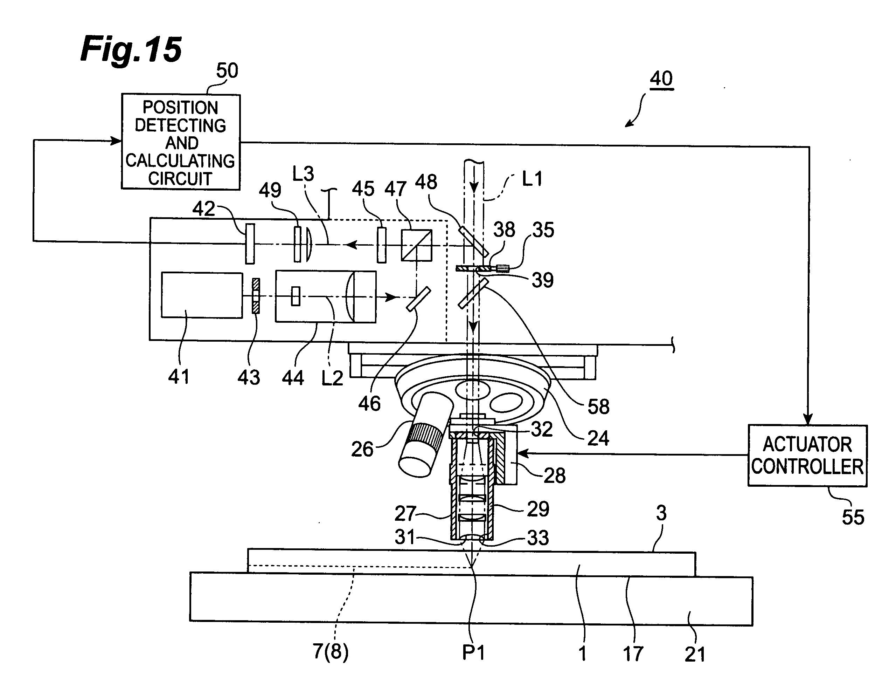

The laser processing apparatus in accordance with this embodiment will now be explained with reference to Figs. 14 and 15.

As shown in Fig. 14, a laser processing apparatus 20 is an apparatus which irradiates a wafer-like object to be processed 1 with processing laser light (first laser light) L1 while locating a light-converging point P1 within the object 1, so as to form a modified region 7 by multiphoton absorption within the object 1, and causes the modified region 7 to form a part to cut 8 extending along the front face 3 of the object 1. Here, the object 1 is a semiconductor wafer such as silicon wafer, whereas the modified region 7 is a molten processed region.

The laser processing apparatus 20 includes a stage 21 on which the object 1 is mounted, whereas the stage 21 is movable along X, Y, and Z axes, where the Z axis extends vertically. Disposed above the stage 21 is a housing 23 accommodating a laser light source 22 for generating processing laser light L1 and the like. For example, the laser light source 22 is an Nd:YAG laser, and emits the processing laser light L1, which is pulsed laser light having a pulse width of 1 µm or less, to the object 1 on the stage 21 positioned just under the laser light source 22.

A powered revolver 24 is attached to the lower end face of the housing 23, and is mounted with an observation objective lens 26 and a processing objective lens 27 for converging the processing laser light L. As the powered revolver 24 revolves, the respective optical axes of the objective lenses 26, 27 are caused to align with the optical axis of the processing laser light L1. Between the processing objective lens 27 and the powered revolver 24, an actuator 28 using a piezoelectric device is interposed, whereby the position of the processing objective lens 27 is minutely adjusted along the Z axis (in vertical directions) by the actuator 28.

As shown in Fig. 15, the processing objective lens 27 includes a cylindrical lens holder 29, whereas the lens holder 29 holds therewithin a condenser lens 31 having a numerical aperture of "0.80" constituted by a plurality of lenses. An entrance opening 32 acting as an entrance pupil is formed at an upper end part of the lens holder 29, whereas an exit opening 33 for the processing laser light L1 is formed at a lower end part of the lens holder 29. Thus configured processing objective lens 27 converges the processing laser light L1, whereby the peak power density of the processing laser light L1 at the light-converging point P1 caused by the condenser lens 31 is 1 x 10⁸ (W/cm²) or greater.

On the optical axis of the processing laser light L1 within the housing 23, a beam expander 34 for enlarging the beam size of the laser light L1 generated by the laser light source 22, a laser light adjusting optical system 36 for adjusting the output and polarization of the laser light L1, an electromagnetic shutter 37 for passing or blocking the laser light L1, and a stop member 38 for narrowing the beam size of the laser light L1 are arranged successively from the upper side to the lower side in this order as shown in Fig. 14.

As shown in Fig. 15, the stop member 38 is attached to the housing 23 at a position above the entrance opening 32 of the processing objective lens 27, while having an aperture 39 for narrowing and passing the laser light L1 on the optical axis of the processing laser light L1. The diameter of the aperture 39 is the same as or smaller than that of the entrance opening 32 of the processing objective lens 27, whereas the center axis of the aperture 39 can accurately be aligned with the center axis of the entrance opening 32 by an adjustment screw 35 attached to the stop member 38.

Arranging thus configured stop member 38 between the beam expander 34 and the processing objective lens 27 can yield the following operations and effects. Namely, in the processing laser light L1 having a beam size enlarged by the beam expander 34, the outer peripheral part greater than the aperture 39 is cut by the stop member 38, whereby the diameter of the processing laser light L1 transmitted through the aperture 39 substantially equals that of the entrance opening 32 of the processing objective lens 27. Therefore, the amount of laser light L1 cut by the surrounding part of the entrance opening 32 can substantially be eliminated, whereby the lens holder 29 can be prevented from being heated upon irradiation with the processing laser light L1. As a consequence, the positional fluctuation in light-converging point P1 of the processing laser light L1 mainly due to the heating of the lens holder 29 during laser processing can be suppressed to a low level.

The laser processing apparatus 20 further comprises light-converging point position control means 40 which regulates the position of the light-converging point P1 such that the light-converging point P1 is positioned at a fixed depth from the front face 3 of the object 1. The light-converging point position control means 40 will be explained with reference to Figs. 15 to 18.

As shown in Fig. 15, rangefinding laser light (second laser light) L2 emitted from a rangefinding light source 41 which is a laser diode or the like successively passes a pinhole 43 and a beam expander 44, and then is successively reflected by a mirror 46 and a half mirror 47, so as to be guided to a dichroic mirror 48 disposed between the electromagnetic shutter 37 and the stop member 38. The rangefinding laser light L2 reflected by the dichroic mirror 48 advances downward on the optical axis of the processing laser light L1, so as to pass the aperture 39 of the stop member 38, and then is converged by the condenser lens 31 of the processing objective lens 27, so as to irradiate the object 1. The processing laser light L1 is transmitted through the dichroic mirror 48.

Reflected light L3 of the rangefinding laser light reflected by the front face (laser light irradiation surface) 3 of the object 1 is made incident on the condenser lens 31 of the processing objective lens 27 again, so as to advance upward on the optical axis of the processing laser light L1 and pass the aperture 39 of the stop member 38, and then is reflected by the dichroic mirror 48. The reflected light L3 of rangefinding laser light reflected by the dichroic mirror 48 successively passes the half mirror 47 and a filter 45. The filter 45 transmits or blocks light depending on its wavelength, so as to transmit the reflected light L3 of rangefinding laser light therethrough but block the reflected light of the processing laser light L1 reflected by the front face 3 and rear face 17 of the object 1. The reflected light L3 of rangefinding laser light transmitted through the filter 45 is converged by a shaping optical system 49 constituted by a cylindrical lens and a planoconvex lens, so as to irradiate a quadrant position detecting device 42 into which a photodiode is equally divided into four.

The converged light image pattern of the reflected light L3 of rangefinding laser light on the quadrant position detecting device 42 acting as a light-receiving device varies depending on where the light-converging point (focal point) of the rangefinding laser light L2 due to the condenser lens 31 of the processing objective lens 27 is positioned with respect to the surface 3 of the object 1. The relationship between the position of light-converging point of the rangefinding laser light L2 and the converged light image pattern of the reflected light L3 of rangefinding laser light will now be explained.

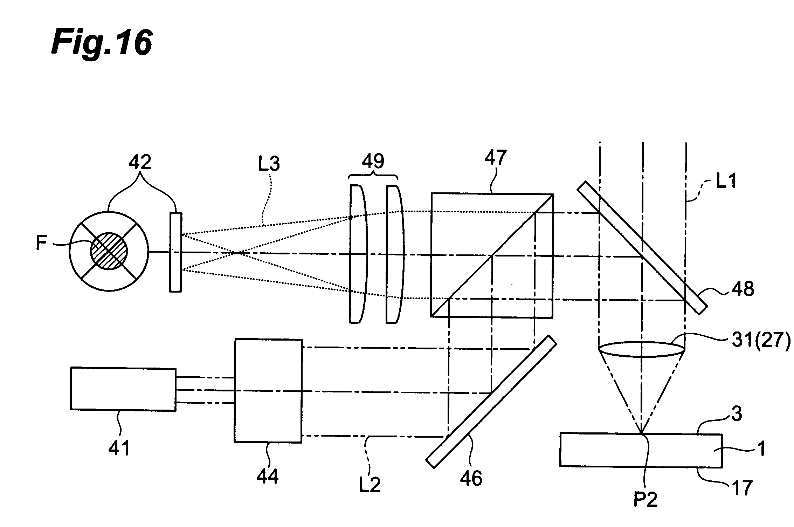

When the light-converging point P2 of rangefinding laser light L2 is positioned on the front face 3 of the object 1 as shown in Fig. 16, the reflected light L3 of rangefinding laser light travels back the condenser lens 31 of the processing objective lens 27 along the same path as with the rangefinding laser light L2, and passes the shaping optical system 49, thereby forming a perfectly circular converged light image pattern F on the quadrant position detecting device 42.

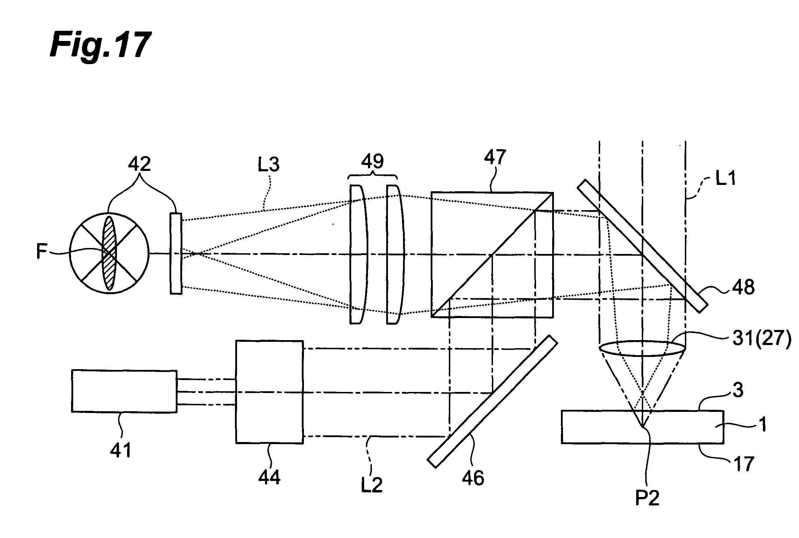

When the light-converging point P2 of rangefinding laser light L2 is positioned beyond the front face 3 of the object (i.e., within the object 1) as shown in Fig. 17, the reflected light L3 of rangefinding laser light travels back the condenser lens 31 of the processing objective lens 27 while diffusing unlike the rangefinding laser light L2, so as to pass the shaping optical system 49, thereby forming a longitudinally elongated elliptical converged light image pattern F on the quadrant position detecting device 42.

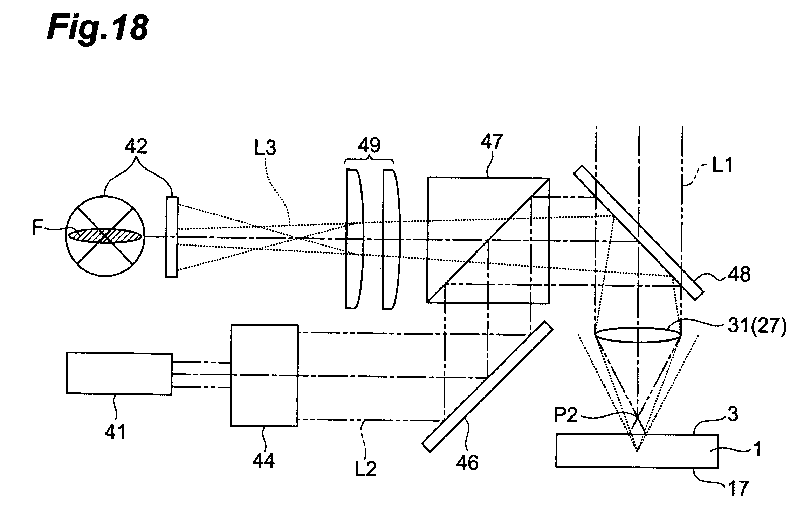

When the light-converging point P2 of rangefinding laser light L2 is positioned in front of the front face 3 of the object 1 as shown in Fig. 18, the reflected light L3 of rangefinding laser light travels back the condenser lens 31 of the processing objective lens 27 while converging unlike the rangefinding laser light L2, so as to pass the shaping optical system 49, thereby forming a laterally elongated elliptical converged light image pattern F on the quadrant position detecting device 42.

As in the foregoing, the converged light image pattern F of the reflected light L3 of rangefinding laser light on the quadrant position detecting device 42 varies depending on the position of light-converging point P of rangefinding laser light. Therefore, the position of light-converging point P2 of rangefinding laser light with respect to the front face 3 of the object 1 can be determined according to an output signal (difference between an output from light-receiving surfaces longitudinally opposing each other and an output form light-receiving surfaces laterally opposing each other).

Therefore, as shown in Fig. 15, the light-converging point control means 40 includes a position detecting and calculating circuit 50 and an actuator controller 55. According to the output signal from the quadrant position detecting device 42, the position detecting and calculating circuit 50 calculates the position of light-converging point P2 of rangefinding laser light L2 with respect to the front face 3 of the object 1. Then, according to the position of light-converging point P2 determined by the position detecting and calculating circuit 50, the actuator controller 55 always feedback-controls the actuator 28 during laser processing such that the light-converging point P1 of processing laser light L1 is positioned at a predetermined depth from the front face 3 of the object 1, thereby minutely adjusting the position of processing objective lens 27 along the vertical axis.

As shown in Fig. 14, for observing the object 1 mounted on the stage 21, the laser processing apparatus 20 has an observation light source 51 for generating observation visible light on the outside of the housing 23, and a CCD camera 52 within the housing 23.

Namely, the observation visible light emitted from the observation light source 51 is guided into the housing 23 by a lightguide 53 made of an optical fiber, so as to pass a field stop 54, an aperture stop 56, a dichroic mirror 57, and the like in succession, and then is reflected by a dichroic mirror 58 disposed between the stop member 38 and the entrance opening 32 of the processing objective lens 27. The reflected observation visible light advances downward on the optical axis of the processing laser light L1, and passes the observation objective lens 26 disposed on the optical axis of the processing laser light L1 as the powered revolver 24 revolves, so as to irradiate the object 1. The processing laser light L1, the rangefinding laser light L2, and its reflected light L3 are transmitted through the dichroic mirror 58.

The reflected light of observation visible light reflected by the front face 3 of the object 1 is made incident on the observation objective lens 26 again, so as to advance upward on the optical axis of the processing laser light L1, and is reflected by the dichroic mirror 58. The light reflected by the dichroic mirror 58 is further reflected by the dichroic mirror 57, so as to pass a filter, an imaging lens 61, and a relay lens 62 in succession, thereby entering the CCD camera 52.

Imaging data captured by the CCD camera 52 are taken into an overall controller 63, whereby an image of the front face 3 of the object 1 or the like is displayed on a TV monitor 64 by the overall controller 63. The overall controller 63 executes various kinds of processing, and regulates not only the movement of the stage 21, rotation of the powered revolver 24, opening/closing of electromagnetic shutter 37, imaging by the CCD camera 52, and so forth, but also operations of the laser processing apparatus 20 as a whole.

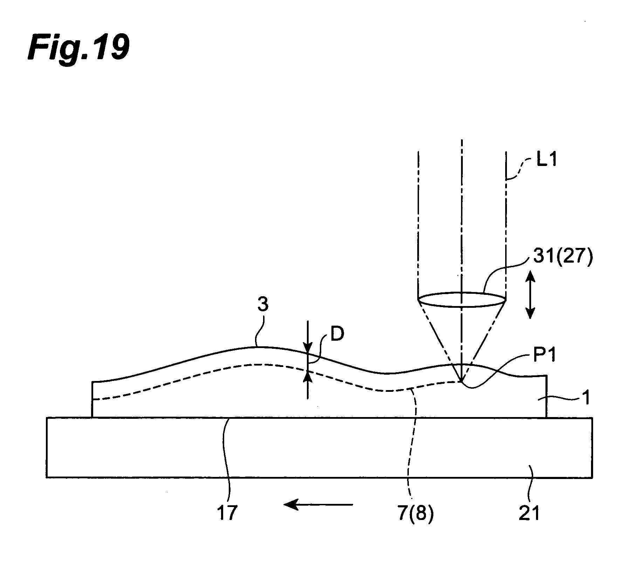

A procedure of laser processing by the above-mentioned laser processing apparatus 20 will now be explained with reference to Fig. 19. Suppose that a modified region 7 is formed along the front face 3 of the object 1 at a depth D from the front face 3, and that a part to cut 8 extending along a line to cut is formed by the modified region 7.

First, the object 1 is mounted on the stage 21, and the stage 21 is moved such that a position at which the forming of the modified region 7 in the object 1 is started coincides with the light-converging point P1 of processing laser light L1. The initial position of the stage 21 is determined according to the thickness and refractive index of the object 1, the numerical aperture of the condenser lens 31 of the processing objective lens 27, etc.

Subsequently, while the laser light source 22 emits the processing laser light L1, the rangefinding laser light source 41 emits the rangefinding laser light L2, and the stage 21 is moved along X and Y axes, such that the laser light beams L1, L2 converged by the condenser lens 31 scan the line to cut. Here, the focal position control means 40 detects the reflected light L3 of rangefinding laser light, and feedback-controls the actuator 28 such that the light-converging point P1 of processing laser light L1 is always positioned at a fixed depth D from the front face 3 of the object 1, thereby minutely adjusting the position of processing objective lens 27 along the vertical axis.

As a consequence, even when the front face 3 of the object 1 wobbles as shown in Fig. 19, the modified region 7 can be formed at a fixed depth D from the front face 3, so that the part to cut 8 conforming to the wobbling of the front face 3 can be formed with the depth D from the front face 3. When the object 1 having the part to cut 8 conforming to the wobbling of the front face 3 as such is cut along the part to cut 8, the accuracy of cutting is stabilized on the front face 3 side of the object 1. Therefore, when forming the front face 3 of the object 1, which is a silicon wafer, with a plurality of functional devices such as light-receiving devices or light-emitting devices and cutting the object 1 into the individual functional devices, the functional devices can be prevented from being damaged by cutting.

Forming the modified region 7 at a position closer to the front face 3 than the rear face 17 within the object 1 can improve the accuracy of cutting on the front face 3 side. Hence, there are cases where the modified region 7 is formed at a position whose depth from the front face 3 is only several tens of micrometers, e.g., at a depth of 30 µm from the front face 3 in a silicon wafer having an average sheet thickness of 100 µm, and at a depth of 10 µm from the front face 3 in a silicon wafer having an average sheet thickness of 50 µm. Even if the front face 3 of the object 1 wobbles in such a case, the laser processing apparatus 20 can form the part to cut 8 conforming to the wobbling of the front face 3 without exposing the modified region 7 at the front face 3.

In the laser processing apparatus 20, as explained in the foregoing, the condenser lens 31 of the processing objective lens 27 converges the processing laser light L1 and rangefinding laser light L2 onto the object 1 on the same axis. Here, the light-converging point position control means 40 detects the reflected light L3 of rangefinding laser light reflected by the front face 3 of the object 1, and positions the light-converging point P1 of processing laser light L1 at a fixed depth D from the front face 3 of the object 1. Since the forming of the modified region 7 by the processing laser light L 1 and the measurement of displacement of the front face 3 by the rangefinding laser light L2 are carried out on the same axis as such, the position of light-converging point P1 of processing laser light L1 can be prevented from shifting from the fixed depth D because of vibrations of the stage 21 mounting the object 1, for example. Therefore, the processing laser light L1 can accurately be converged at the fixed depth D from the front face 3 of the object 1.

For forming the modified region 7 by multiphoton absorption within the object 1 having a thin sheet form, it is necessary for the condenser lens 31 of the processing objective lens 27 to have a large numerical aperture, e.g., "0.80", whereby the condenser lens 31 and the object 1 approach each other to a distance of about 10 mm. While it is quite difficult to place a sensor or the like for measuring the displacement of the front face beside the condenser lens 31 under such a condition in terms of apparatus configuration, the laser processing apparatus 20 makes it unnecessary to employ such a difficult configuration.

On the optical path of the reflected light L3 of rangefinding laser light in the laser processing apparatus 20, the filter 45 adapted to transmit the reflected light L3 therethrough but block the reflected light of processing laser light L1 reflected by the front face 3 and rear face 17 of the object 1 is provided. This allows the light-converging point position detecting means 40 to detect the reflected light L3 of rangefinding laser light accurately without being influenced by the reflected light of processing laser light L1, and makes it possible to further improve the positional accuracy of the light-converging point P1 of processing laser light L1.

The present invention is not restricted to the above-mentioned embodiment. For example, while the above-mentioned embodiment relates to a case where the modified region 7 due to multiphoton absorption is formed within the object 1, the present invention is applicable to various kinds of laser processing, whereby laser light for processing the object 1 can accurately be converged at a predetermined position as in the above-mentioned embodiment.

Though the above-mentioned embodiment relates to a case where the light-converging point position control means 40 detects the reflected light L3 of rangefinding laser light at the front face 3 of the object 1, the present invention is not restricted thereto. For example, the reflected light of rangefinding laser light L2 at the rear face (laser light irradiation surface) 17 of the object 1 may be detected together with the reflected light L3 of rangefinding laser light at the front face 3 of the object 1. This can measure the displacement of the front face 3 and the displacement of the rear face 17 in the object 1, whereby the thickness of the object 1 just under the condenser lens 31 of the processing objective lens 27 can be determined accurately. Therefore, the position of light-converging point P1 of processing laser light L1 can be controlled such that, for example, the light-converging point P1 is placed at a position which is one half of the thickness of the object 1 or at a position which is 1/3 of the thickness from the front face 3 of the object 1.

Though the above-mentioned embodiment relates to a case where the light-converging point P1 of processing laser light L1 is positioned at a fixed depth from the front face 3 of the object 1, the position control of light-converging point P may be carried out such that the position at which the light-converging point P1 is placed is changed along the line to cut. For example, the position at which the light-converging point P1 is placed may be changed like a wavy line, or the depth of the position at which the light-converging point P1 is placed may be changed in the middle.

### Industrial Applicability

As explained in the foregoing, the laser processing apparatus and laser processing method in accordance with the present invention can accurately converge laser light for processing an object to be processed at a predetermined position.

## Claims

1. A laser processing apparatus for irradiating a wafer-like object to be processed with first laser light while locating a light-converging point within the object so as to form a modified region by multiphoton absorption within the object, the apparatus comprising:
a condenser lens for converging the first laser light and second laser light for measuring a displacement of a laser light irradiation surface of the object onto the object on the same axis; and
light-converging point position control means for regulating a position of the light-converging point of the first laser light within the object by detecting reflected light of the second laser light reflected by the laser light irradiation surface.

2. A laser processing apparatus according to claim 1, wherein the laser light irradiation surface is a surface of the object on the condenser lens side; and
wherein the light-converging point position control means regulates the position of light-converging point of the first laser light such that the position of light-converging point of the first laser light is at a predetermined depth from the surface on the condenser lens side.

3. A laser processing apparatus according to claim 1 or 2, wherein the light-converging point position control means regulates the position of light-converging point of the first laser light within the object by changing a distance between the condenser lens and the object.

4. A laser processing apparatus according to one of claims 1 to 3, wherein a filter transmitting the reflected light of the second laser light but blocking reflected light of the first laser light reflected by the laser light irradiation surface is provided on the optical path of the reflected light of the second laser light.

5. A laser processing apparatus for irradiating an object to be processed with first laser light so as to process the object, the apparatus comprising:
a condenser lens for converging the first laser light and second laser light for measuring a displacement of a laser light irradiation surface of the object onto the object on the same axis; and
light-converging point position control means for regulating a position of a light-converging point of the first laser light with respect to the object by detecting reflected light of the second laser light reflected by the laser light irradiation surface.

6. A laser processing method of irradiating a wafer-like object to be processed with first laser light while locating a light-converging point within the object so as to form a modified region by multiphoton absorption within the object; the method comprising the steps of
converging the first laser light and second laser light for measuring a displacement of a laser light irradiation surface of the object onto the object on the same axis; and
regulating a position of the light-converging point of the first laser light within the object by detecting reflected light of the second laser light reflected by the laser light irradiation surface.

7. A laser processing method of irradiating an object to be processed with first laser light so as to process the object; the method comprising the steps of
converging the first laser light and second laser light for measuring a displacement of a laser light irradiation surface of the object onto the object on the same axis; and
regulating a position of the light-converging point of the first laser light with respect to the object by detecting reflected light of the second laser light reflected by the laser light irradiation surface.
